# EUROPEAN PATENT SPECIFICATION

(11) **EP 2 601 136 B1**
(45) Date of publication and mention of the grant of the patent: **23.10.2019**
(21) Application number: 11740659.5
(22) Date of filing: 05.08.2011
(51) Int. Cl.: C01B 15/10, C11D 3/39, C11D 17/00

(54) **COATED SODIUM PERCARBONATE PARTICLES, PROCESS FOR THEIR PREPARATION, THEIR USE IN DETERGENT COMPOSITIONS AND DETERGENT COMPOSITIONS CONTAINING THEM**
BESCHICHTETE NATRIUMPERCARBONATPARTIKEL, VERFAHREN ZU IHRER HERSTELLUNG, IHRE VERWENDUNG IN REINIGUNGSMITTELZUSAMMENSETZUNGEN UND REINIGUNGSMITTELZUSAMMENSETZUNGEN DAMIT
PARTICULES DE PERCARBONATE DE SODIUM REVÊTUES, LEUR PROCÉDÉ DE PRÉPARATION, LEUR UTILISATION DANS DES COMPOSITIONS DÉTERGENTES ET COMPOSITIONS DÉTERGENTES LES CONTENANT

(30) Priority: 05.08.2010 EP 10172063
(43) Date of publication of application: 12.06.2013
(73) Proprietor: SOLVAY SA, 1120 Bruxelles (BE)
(72) Inventor: RABE, Jürgen, 56598 Rheinbrohl (DE); HECKEN, Gerd, 53562 St Katharinen (DE); DUNG, Hans, Dieter, 53547 Dattenberg (DE); KÖTTING, Frank, 56588 Waldbreitbach (DE); SÖNTGERATH, Alfred, 53547 Hausen (DE)
(74) Representative: Vande Gucht, Anne
(86) International application number: PCT/EP2011/063507
(87) International publication number: WO 2012/017066

(56) References cited:
- EP-A1- 0 363 852
- WO-A1-2004/099071
- WO-A1-2008/080905
- CA-A1- 2 166 281
- US-A- 6 113 805

## Description

The present invention is related to coated sodium percarbonate particles, to a process for the preparation of the coated sodium percarbonate particles, to the use of the coated sodium percarbonate particles in detergent compositions and to detergent compositions comprising the coated sodium percarbonate particles.

The use of sodium percarbonate (or sodium carbonate peroxyhydrate) as the active bleach constituent in detergent compositions for household fabric washing or dish washing is well known. Commonly such detergent compositions contain among other components zeolites as builder material, enzymes, bleach activators and/or perfumes. The bleaching action of sodium percarbonate is due to the release of active oxygen when it decomposes during washing. However, the interaction between sodium percarbonate and other formulation components leads to progressive premature decomposition of the percarbonate and hence to loss of bleaching power during storage and transportation of the composition. This progressive decomposition is accelerated when the percarbonate is submitted to heating or stored in presence of humidity. Consequently, the storage of sodium percarbonate in moist and warm environments, as for instance when the product is marketed in southern countries, is difficult.

A number of proposals have been made to overcome this problem by interposing a layer between the sodium percarbonate and its environment. This layer, which usually coats a sodium percarbonate core acts as a protective layer which has a stabilizing action. A further difficulty is that such coating layers should not reduce excessively the relative active oxygen content of the sodium percarbonate and should not increase unduly its dissolution time. For instance, in the patent application JP 59/204697 a borate is used as one of the constituents of the coating layer. Despite a good stabilizing effect, boron compounds have nowadays to be avoided in detergent formulations. The patent US-A-5346680 (SOLVAY INTEROX) discloses sodium percarbonate coated with a mixture of sodium carbonate and sodium chloride. The patent application EP-A-623553 discloses sodium percarbonate coated with a mixture of sodium carbonate, sodium silicate and magnesium sulphate.

In US5902682 are disclosed sodium percarbonate particles coated with a coating layer comprising sodium carbonate and at least one magnesium compound. The coating layer has the function of absorbing water coming from the environment, to avoid that this water penetrates the sodium percarbonate core. The water acceptance capacity is exhausted when the coating layer is in hydrated form.

These known coating layers do not result in an optimum combination of properties since they do not confer simultaneously a good stability to the sodium percarbonate when present in the detergent composition, in particular when the detergent is stored in warm and moist environment, together with a rapid dissolution rate when the composition is used in washing applications CA 2 166 281 A1 discloses coated sodium percarbonate particles containing a sodium percarbonate core, and a coating, comprising sodium carbonate and magnesium sulphate, located in a single coating layer or in separate coating layers. The stabilizing coating components are partially hydrated. The coated sodium percarbonate particles are contained in detergent compositions. CA 2 166 281 A1 also discloses a process for preparing the coated sodium percarbonate particles, in which uncoated sodium percarbonate core particles are contacted with a coating solution comprising sodium carbonate and/or magnesium sulphate by spraying the coating solution on the core particles and dried in a fluid bed.

The aim of the present invention is to overcome the aforementioned drawback by proposing new coated sodium percarbonate particles presenting a good stability and a rapid dissolution rate, and which can be produced at low cost.

Consequently, the invention concerns coated sodium percarbonate particles containing:
a) A sodium percarbonate core, and
b) A coating representing between 5 and 20 % in weight of the coated sodium percarbonate particles, the coating comprising at least one coating layer comprising at least 20 % in weight sodium carbonate, at least 75 % in weight of the sodium carbonate being in the monohydrate form, wherein the total sodium carbonate monohydrate of the particle is less than 20 % in weight of the coated particle.

Surprisingly, despite the high content of water in the form of sodium carbonate monohydrate in the coating and the fact that moisture is detrimental to the stability of sodium percarbonate, the inventors have discovered that the coated sodium percarbonate particles according to the invention show an outstanding stability, even when stored in a moist environment.

Sodium carbonate monohydrate, which is registered under the CAS number 5968-11-6 responds to the formula :

Na₂CO₃ . H₂O

The coating of the sodium percarbonate particles according to the invention comprises at least one coating layer containing at least 25 %, advantageously at least 30 %, more advantageously at least 50 %, preferably at least 75 % in weight sodium carbonate. In order to achieve the stabilizing effect, which is so surprising, of the presence of water in the coating, when the water is present as sodium carbonate monohydrate, at least 50 %, advantageously at least 60 %, preferably at least 70 %, more preferably at least 80 % most preferably at least 90 % of the sodium carbonate which is present in the coating is in the monohydrate form. Values as high as at least 95 %, even at least 99 % can even be preferred.

When expressed as a weight percentage of the coated particle, generally, the coated sodium percarbonate particles contain at least 5 %, usually at least 7 %, often at least 8 % or even at least 10 % in weight sodium carbonate (the major part of which is in the monohydrate form).

It is recommended that the total amount of sodium carbonate monohydrate in the coating (including the different layers if appropriate) is at least 2 % in weight of the coated particles, preferably at least 3 %, more preferably at least 4 %, most preferably at least 5 %. The sodium carbonate particles according to the invention cannot however contain globally too much sodium carbonate monohydrate. The total sodium carbonate monohydrate content of the coated particles must represent less than 20 % in weight of the particles, advantageously less than 18 %, preferably less than 15 %.

The coating of the coated particles according to the invention can advantageously contain only one layer. However it can contain several layers. Values of 2, 3 or 4 are common. The total coating (all coating layers included) represents from 5 to 20, more preferably from 8 to 15 weight % of the coated sodium percarbonate particle. The coated sodium sodium percarbonate particles contain usually more than 70 %, preferably more than 75 %, more preferably more than 80 %, most preferably more than 85 % in weight of sodium percarbonate.

As described here above, the coating of the coated particles according to the invention are preferably based on sodium carbonate which itself is advantageously in the monohydrate form. However, at least one layer of the coating can contain in some instances advantageously additionally at least 10 %, generally at least 20 %, often at least 30 %, sometimes at least 40 % even at least 50 % in weight of sodium sulphate.

In a particularly advantageous embodiment, the coating layer comprises at least one layer comprising a mixture of sodium carbonate and sodium sulphate. This layer amounts advantageously to at least 5 % in weight of the coated particles. The relative weight in sodium carbonate and sodium sulphate in the mixture are preferably in the range from 25:75 to 75: 25 in weight, more preferably in the range between 25:75 and 40:60. The preferred proportions of sodium carbonate in the monohydrate form are as described above.

The coated sodium percarbonate particles according to the invention usually present a mean particle size of at least 500 µm. The mean particle size is advantageously at least 550 µm. It is generally at most 1000 µm. Preferably it is at most 850 µm. Mean particle sizes from 500 to 1000 µm, preferably from 550 to 850 µm give good results.

The coated sodium percarbonate particles according to the invention usually contain a fraction of particles having a particle size superior to 1000 µm of at most 30 % w/w. It is preferably at most 25 % w/w. Large fractions above 1000 µm give rise to unwanted segregation of bleach from a detergent matrix on handling and can have an undesirable appearance. The fraction of particles having a particle size superior to 1000 µm is usually at least 0,1 % w/w. On the other side, the coated sodium percarbonate particles according to the invention have preferably a negligible amount of particles having a particle size inferior to 150 µm, this amount being usually less than 1 % w/w. Particle sizes are measured by sieve analysis.

In an advantageous embodiment of the invention, the core of the coated particles have a diameter distribution such that at least 90 %, preferably at least 95 % in weight of the particles have a diameter greater than 325 µm. The sieve analysis is performed on the particles before coating.

The coated sodium percarbonate particles according to the invention have usually a 90 % dissolution time of at least 0,5 min. It is in particular at least 0,9 min. Generally the 90 % dissolution time is at most 3 min. It is preferably at most 2,5 min. 90 % dissolution times from 0,5 to 3 min, preferably from 0,9 to 2,5 min give good results. The 90 % dissolution time is the time taken for conductivity to achieve 90 % of its final value after addition of coated sodium percarbonate to water at 20°C and 2,5 g/l concentration. The measurement is adapted from ISO 3123-1976 (for industrial perborates), the only differences being the stirrer height (1 mm from the beaker bottom) and the beaker volume (2 litres, internal height 183 mm, internal diameter 127 mm). The stirrer speed is 350rpm.

The coated sodium percarbonate particles according to the invention usually have a bulk density of at least 0,9 g/cm³. The bulk density is preferably at least 1,0 g/cm³. It is generally at most 1,2 g/cm³. It is in particular at most 1,1 g/cm³. Bulk densities from 0,9 to 1,2 g/cm³, preferably from 0,95 to 1,1 g/cm³ give good results. The bulk density is measured by recording the mass of sample in a stainless steel cylinder of internal height and diameter of 86.1 mm, after running the sample out of a funnel (upper internal diameter 108 mm, lower internal diameter 40 mm, height 130 mm) placed 50 mm directly above the receiver.

The coated sodium percarbonate particles according to the invention present usually an Avox of at least 12 % w/w. The Avox is preferably at least 13 % w/w. The Avox is generally at most 15 % w/w. It is in particular at most 14 % w/w. Avox values from 12 to 15 % w/w and preferably from 13 to 14 % w/w are convenient. The Avox is the available oxygen found in sodium percarbonate and indicates the amount of oxygen utilisable in a chemical reaction. It is measured by titration with potassium permanganate after dissolution in sulfuric acid (see ISO 1917-1982) according to the following reaction :

6H⁺ + 2MnO₄⁻ + 5H₂O₂ → 2Mn²⁺ + 8H₂O + 5O₂

For Avox calculation :

H₂O₂ → H₂O + O

where O represents Avox.

One of the critical features of the coated sodium carbonate particles according to the invention is the controlled quantity of sodium carbonate which is in the monohydrate form. In this respect, a particular attention has to be brought during the manufacture of the coated particles to the control of the temperature of the core particles, of the solution used to coat them and to the control of the temperature of the coated particles during the dying, in order to induce the proper crystallisation of the sodium carbonate in the coating in the monohydrate form. The precise temperatures to produce the monohydrate form can vary, depending on the drying air flow, drying air relative humidity and the residence time of the particles in the drying bed. However, in most standard conditions, core particles are generally contacted with the coating solution at a temperature comprised between 45 and 60°C and the coated particles are generally dried at temperatures between 60 and 75°C.

In consequence, the invention concerns also a process for preparing the coated sodium percarbonate particles according to the invention in which uncoated sodium percarbonate core particles are contacted at a temperature comprised between 45 and 60°C with a coating solution comprising sodium carbonate and the coated particles are dried at a temperature comprised between 60 and 75°C.

The sodium percarbonate core particles can be obtained for example by crystallisation from a bulk saturated solution of sodium percarbonate in a crystalliser/classifier, the percarbonate solution being prepared out of sodium carbonate and hydrogen peroxide. They could also be obtained for example by a fluid bed process, wherein aqueous hydrogen peroxide and aqueous soda ash solutions are sprayed onto sodium percarbonate seeds in a fluidised bed, or through the reaction of solid sodium carbonate with an aqueous hydrogen peroxide solution. Preferably, the sodium percarbonate core particles are obtained by a crystallisation process using a salting-out agent.

In the process according to the invention, it is recommended that the coating solution comprises more than 23 % in weight of sodium carbonate.

The core particles can be contacted with the coating solution in a mixer. It is however recommended that the core particles are contacted with the coating solution by spraying the coating solution on the core particles in a fluid bed.

In another recommended embodiment, the coating is performed in two steps, the first one using a mixer, and the second one a fluid bed.

The coated sodium percarbonate particles according to the invention can advantageously be used as active bleach constituent in detergent compositions.

The present invention therefore concerns also the use of the above described coated sodium percarbonate particles as active bleach constituent in detergent compositions.

The present invention also concerns detergent compositions containing the above described coated sodium percarbonate particles as active bleach constituent and a builder, either zeolitic or non-zeolitic. The detergent compositions can also contain other constituents such as surfactants, antiredeposition and soil suspension agents, bleach activators, optical brightening agents, soil release agents, suds controllers, enzymes, fabric softening agents, perfumes, colours and processing aids. The incorporation of coated percarbonate particles according to the invention into detergent powders or granules with a bulk density of 0,4 to 1,0 g/cm³ and into detergent tablets which are either zeolite or phosphate built is particularly advantageous.

In the examples whose description will follow, sodium percarbonate core particles were coated with different coating layers. The intrinsic stability of the coated particles was evaluated through intrinsic TAM and long term intrinsic stability test. Their in-detergent stability was also evaluated through in-detergent TAM, short term in-detergent stability and long term in-detergent stability tests. Those tests were performed in the following manner.

### Intrinsic TAM test

The intrinsic stability of the percarbonate particles may be expressed as heat output at 40°C, 50°C or 60 °C measured after storage of 1 g of the product during 7 days at the given temperature in a closed ampoule of 3,5 ml. The heat flow (heat leakage) between the ampoule containing the coated sodium percarbonate particles and a temperature controlled bath is measured and compared to a reference material with a known heat of reaction. The measurement, performed by microcalorimetry, preferably using a TAM III produced by TA Instruments, is made during 48h. The reported value is the heat flow at the end of the measurement.

### Long term intrinsic stability test

The long term stability of the sodium percarbonate was evaluated in the following manner: 8 ampoules of 3,5 ml are filled each with 1g sodium percarbonate. At the same time, the AVOX of the percarbonate at the filling time is measured. The ampoules are stored in an oven at a temperature of 55°C. At the end of each week (up to 8 weeks), one ampoule is open and the remaining AVOX of the sodium percarbonate is measured. The 8 values (for weeks 1 to 8) are expressed as percentages of the initial value of the AVOX.

### Short term in-detergent stability test (modified H4 test)

The in-detergent stability of the coated percarbonate was also evaluated through the following short time test. 200g of light soda ash, 200g of sodium bicarbonate (fraction < 150 µm), 90 g of TAED activator and 45 g of surfactant (ethoxylated 1-5 EO C12 - C15 alcohol) are mixed with 360g of coated sodium percarbonate and placed into a calibrated Dewar (Producer KGW Isotherm; Dewar type: 26 B/BE with 1 liter volume and standard lid). The Dewar is equipped with a temperature sensor dipped 6cm in the mixture from the middle of its cover. The calibration of the Dewar was performed by first filling it with water at 15°C and placing it in an oven at 65°C during 24h. The temperature rise, which was registered every 30min, needed to be at most 2°C/h. The calibrated Dewar, filled with the mixture, was then placed into an oven preheated at 65°C. The rise in time of the temperature is monitored. Both the time needed to reach 80°C and the temperature after 150min are registered.

### Long term in-detergent stability test

The long term in-detergent stability was measured as follows: a detergent composition is prepared by dry mixing 15 % by weight of coated sodium percarbonate particles with 85 % by weight of a base detergent composition, called IEC-A* base, containing about 35 % by weight zeolite A. Samples (50 g) of the blended composition are transferred into polyethylene-coated cartons which are sealed and the cartons stored in a temperature and humidity controlled cabinet at 32° C., 80 % relative humidity for 8 weeks. The available oxygen content (Avox) of the compositions are measured at the beginning, every two weeks and at the end of the storage period, using a standard potassium permanganate titration method and the Avox remaining at the end expressed as a percentage of its starting value is calculated.

### In-detergent TAM test

The in-detergent stability of the percarbonate was also evaluated by placing 1g of the IEC-A* - PCS blend (85 %- 15 %) in a 3,5 ml ampoule and directly measuring (without storing for 7 days in an oven) the heat flow in a TAM III, for 20 or 48h.

The water content of the particles was measured with a Mettler HR83 apparatus (using 7.5g of samples). Programs 2 and 3 were used. Program 2 performs a measurement at 60°C and analyses the free water. Program 3 is performed at 85°C and analyses the total water, including the water included in the monohydrate crystals. The sodium carbonate monohydrate content in the coating layer can be deduced by comparison of both results. The diameters of the core and coated particles were measured by sieve analysis. In this specification, except when explicitly stated, all percentages are weight percentages.

### Examples

In the examples below, sodium percarbonate core particles were manufactured using a continuous aqueous crystallisation process. 2000 g of those core particles were then dried by introducing them into a lab size fluid bed dryer produced from Glatt GmbH (model: Labortrockner WSG 1 with electrical heating, 1976). The air inlet temperature was set to 100°C. The particles were removed when their temperature reached 65°C and let to cool. The dried and cooled particles were then again introduced in the same fluid bed dryer, with the same inlet air temperature (100°C). A 30 % in weight sodium carbonate solution, having a temperature between 30 and 40°C was sprayed onto the particle bed with a two fluid nozzle with a nozzle pressure of 1,5 bar. The total amount of sprayed solution was calculated to obtain the targeted coating level. The flow rate of the coating solution in the nozzle was adjusted in order to maintain during the spraying the temperature of the percarbonate in the fluid bed in the range 50-55°C.

When the calculated mass of coating solution was sprayed, spraying was stopped. The percarbonate material then heated up. Heating was stopped when the material temperature had reached 60-65°C to dry the coating layer, but to keep the sodium carbonate in the monohydrate form.

### Example 1

In example 1, which illustrates the invention, core particles, having the properties listed in tables 1a, 1b and 1c, were coated with a target coating layer of 10 % in weight sodium carbonate, more than 99 % of which is in the monohydrate form. Intrinsic TAM measurement was performed at 50°C (with 7 days pre-treatment). In-detergent short term (H4) and long term storage tests were also performed. The results are given in table 1a. The SiO₂, boron, magnesium, sodium sulphate and sodium chloride contents are given in table 1b. Sieve analysis results are in table 1c.

### Example 2

In example 2, which illustrates a preferred embodiment of the invention, it was performed as in example 1, except that the core particles were sieved before the coating step, in order to eliminate the particles having a diameter below 400 µm.

The results are given in tables 1a, 1b and 1c, illustrating a further improvement of the stability of the coated particles according to this preferred embodiment.

### Examples 3, 4 and 5

In the examples 3, 4 and 5 below, it was performed as in example 1 except that the 30 % sodium carbonate solution used for the coating was replaced by a solution obtained by dissolving both sodium carbonate and sodium sulphate in water. The composition of the solution and the final proportion of sodium sulphate were the following :

| Example | Composition of the solution | Proportion of sodium sulphate in the coating |
|---|---|---|
| 3 | 25 % solids in water; ratio Na2SO4:Na2CO3= 1:3 | 25 % |
| 4 | 25 % solids in water; ratio Na2SO4:Na2CO3= 1:1 | 50% |
| 5 | 25 % solids in water; ratio Na2SO4:Na2CO3= 3:1 | 75 % |

The properties of the core and coated particles are given in tables 2a, 2b and 2c.

### Example 6 and comparative example 7

Example 6 reproduces example 1, but starting from another batch of similar core particles.

In example 7, the coated particles of example 6 were dried to a total moisture content (including crystal water) of 0,12 %. The drying was performed by introducing the particles in the fluid bed dryer described above (air temperature 100°C) until the material temperature had reached 80-90°C. The proportion of sodium carbonate left in monohydrate form was then below 50 %. The results of the stability tests are given in table 4.

The comparison of examples 6 and 7, in particular the H4 test shows that the in-detergent stability of the coated particles is strongly reduced as a consequence of the conversion of monohydrate into anhydrous sodium carbonate caused by the drying.

This effect was further confirmed by examples 8 and 9.

### Example 8 and comparative example 9

In example 8 it was again operated as in example 1, but starting from still another batch of core particles, produced similarly than those of example 1.

In Example 9, it was operated as in example 8, with the exception that during the coating, the sodium percarbonate bed was heated up to 85-90°C in place of 60-75°C with the consequence that anhydrous sodium carbonate was directly produced, in place of sodium carbonate monohydrate.

The comparison of examples 8 and 9 confirms the advantage of the presence of sodium carbonate monohydrate according to the invention, in the coating.

### Examples 10 to 12, comparative examples 13 and 14

In examples 10 to 12 and comparative examples 13 and 14 it has been operated as in examples 3 to 5, with the exception that the amount of sodium sulphate has been further varied.

| Example | Composition of the solution | Proportion of sodium sulphate in the coating |
|---|---|---|
| 10 | 25 % solids in water; ratio Na2SO4:Na2CO3= 3:2 | 60 % |
| 11 | 25 % solids in water; ratio Na2SO4:Na2CO3= 7:3 | 70 % |
| 12 | 25 % solids in water; ratio Na2SO4:Na2CO3= 4:1 | 80 % |
| 13 | 25 % solids in water; ratio Na2SO4:Na2CO3= 9:1 | 90 % |
| 14 | 25 % solids in water, pure Na2SO4 | 100 % |

The stability of the coated sodium percarbonate particles was measured, both intrinsically and in detergent, as in examples 3 to 5, except that the TAM measurement was operated at 55°C and for 20h, in place of 60°C and 2 days. The results are in table 5. Comparison of the whole set of examples 3 to 5 and 10 to 14 shows a surprising improvement of the stability of the particles when the coating comprises sodium carbonate monohydrate and sodium sulphate in a proportion Na2SO4:Na2CO3 comprised between 3:2 and 4:1.

**Table 1a**

| | bulk density | available oxygen | coating level with AvOx | water content M60°C | water content M85°C | TAM 50°C 48h | Storage test (32°C/80 % r.h.) in box with IECA^{∗}base 2/4/6/8 weeks | In-detergent stability test (mod. H4) | |
|---|---|---|---|---|---|---|---|---|---|
| | | | | | | | | T₁₅₀ | t₈₀ |
| | [kg/l] | [%] | [%] | [%] | [%] | [µW/g] | res. [%] | [°C] | [Min.] |
| Core particle 1 | 0,94 | 14,49 | - | 0,20 | 0,38 | 12 | 70/49/31/17 | 83,1 | 135 |
| | | | | | | 4,8 | | | |
| Example 1 (10 % Na₂CO₃.H₂O) | 1,09 | 12,76 | 12 | 0,07 | 1,40 | 1,7 | 93/84/72/57 | 70,6 | 295 |
| | | | | | | 1,7 | | | |
| Core particle 2 | 0,94 | 14,48 | - | 0,47 | 0,62 | 14 | 73/52/25/12 | 85,5 | 128 |
| | | | | | | 14 | | | |
| Example 2 (10 % Na₂CO₃.H₂O) | 1,04 | 12,93 | 11 | 0,13 | 2,56 | 20 | 95/92/84/70 | 69,5 | 375 |
| | | | | | | 12 | | | |

**Table 1b**

| | bulk density | available oxygen | coating level | SiO₂ | B | Mg | Na₂SO₄ | NaCl |
|---|---|---|---|---|---|---|---|---|
| | | | with AvOx | | | | | |
| | [kg/l] | [%] | [%] | [%] | [%] | [ppm] | [%] | [%] |
| Core particle 1 | 0,94 | 14,49 | - | 0,20 | < 0,01 | 28 | 0,01 | 3,4 |
| Example 1 (10 % Na₂CO_{3.}H₂O) | 1,09 | 12,76 | 12 | 0,19 | < 0,01 | 30 | 0,01 | 3,3 |
| Core particle 2 | 0,94 | 14,48 | - | 0,21 | < 0,01 | 28 | 0,01 | 3,1 |
| Example 2 (10 % Na₂CO₃.H₂O) | 1,04 | 12,93 | 11 | 0,19 | < 0,01 | 30 | 0,02 | 2,8 |

**Table 1c**

| | bulk density | available oxygen | coating level | MPS | span | sieve analysis | | | | | |
|---|---|---|---|---|---|---|---|---|---|---|---|
| | | | with AvOx | | | > 500 | > 425 | > 300 | > 250 | > 150 | < 150 |
| | [kg/l] | [%] | [%] | [µm] | | [%] | [%] | [%] | [%] | [%] | [%] |
| Core particle 1 | 0,94 | 14,49 | - | 706 | 1,20 | 68 | 75 | 89 | 93 | 99 | 1 |
| Example 1 (10 % Na₂CO₃.H₂O) | 1,09 | 12,76 | 12 | 741 | 1,21 | 70 | 75 | 87 | 92 | 100 | 0 |
| Core particle 2 | 0,94 | 14,48 | - | 781 | 0,93 | 80 | 90 | 100 | 100 | 100 | 0 |
| Example 2 (10 % Na₂CO₃.H₂O) | 1,04 | 12,93 | 11 | 833 | 0,89 | 86 | 94 | 100 | 100 | | |

**Table 2a**

| product | bulk density | available oxygen | coating level | water content | water content | Long term intrinsic stability test 55°C | TAM 60°C 2days | Storage test 32°C/80% r.h. in box with IECA^{∗}base 2/4/6/8 weeks | MOD. H4 TEST | |
|---|---|---|---|---|---|---|---|---|---|---|
| | | | with AvOx | M60°C | M85°C | | | | T₁₅₀ | t₈₀ |
| | [kg/l] | [%] | [%] | [%] | [%] | res. [%] | [µW/g] | res. [%] | [°C] | [Min.] |
| Core particles 1 | 1,06 | 14,42 | - | 0,05 | 0,33 | 99 / 98 / 98 / 96 / 95 / 94 / 93 / 89 | - | - | - | - |
| Example 3 (10 % Na₂CO₃^{∗}H₂O/ Na₂SO₄ 25 : 75) | 1,09 | 12,82 | 11,1 | 0,08 | 0,22 | 97 / 95 / 88 / 83 / 79 / 93 / 64 / 92 | 27 | 100/93/90/86 | 65,7 | > 5800 |
| | | | | 0,17 | 0,36 | | 13 | | | |
| | | | | (1d) | (1d) | | | | | |
| Example 4 (10 % Na₂CO₃^{∗}H₂O / Na₂SO₄ 50 : 50) | 1,07 | 12,89 | 10,6 | 0,08 | 1,25 | 97 / 94 / 91 / 81 / 89 / 68 / 52 / 41 | 30 | 98/92/88/82 | 67,0 | 920 |
| | | | | 0,16 | 1,05 | | 31 | | | |
| | | | | (1d) | (1d) | | | | | |
| Example 5 (10 % Na₂CO₃^{∗}H₂O / Na₂SO₄ 75 : 25) | 1,08 | 12,99 | 9,9 | 0,07 | 1,67 | 96 / 92 / 92 / 87 / 83 / 92 / 63 / 90 | 17 | 96/88/85/77 | 67,1 | 690 |
| | | | | 0,12 | 1,75 | | 10 | | | |
| | | | | (1d) | (1d) | | 28 | | | |

**Table 2b**

| product | bulk density | available oxygen | coating level | SiO₂ | B | Mg | Na₂SO₄ | NaCl |
|---|---|---|---|---|---|---|---|---|
| | | | with AvOx | | | | | |
| | [kg/l] | [%] | [%] | [%] | [%] | [ppm] | [%] | [%] |
| Core particles 1 | 1,06 | 14,42 | - | 0,21 | < 0,01 | 19 | < 0,1 | 3,6 |
| Example 3 (10 % Na₂CO₃/Na₂SO₄ 25 : 75) | 1,09 | 12,82 | 11,1 | 0,17 | < 0,01 | 21 | 9,33 | 3,1 |
| Example 4 (10 % Na₂CO₃ /Na₂SO₄50 : 50) | 1,07 | 12,89 | 10,6 | 0,18 | < 0,01 | 20 | 5,74 | 3,1 |
| Example 5 (10 % Na₂CO₃/Na₂SO₄ 75 : 25) | 1,08 | 12,99 | 9,9 | 0,18 | < 0,01 | 34 | 3,13 | 3,2 |

**Table 2c**

| product | bulk density | available oxygen | coating level | MPS | span | sieve analysis | | | | | | | | | | | |
|---|---|---|---|---|---|---|---|---|---|---|---|---|---|---|---|---|---|
| | | | with AvOx | | | > 1600 | > 1400 | > 1250 | > 1000 | > 850 | > 600 | > 500 | > 425 | > 300 | > 250 | > 150 | < 150 |
| | [kg/l] | [%] | [%] | [µm] | | [%] | [%] | [%] | [%] | [%] | [%] | [%] | [%] | [%] | [%] | [%] | [%] |
| Core particles 1 | 1,06 | 14,42 | - | 743 | 1,11 | 0 | 2 | 5 | 24 | 38 | 64 | 74 | 80 | 91 | 94 | 99 | 1 |
| Example 3 (10 % Na₂CO₃ / Na₂SO₄25 : 75) | 1,09 | 12,82 | 11,1 | 752 | 0,99 | 0 | 2 | 5 | 21 | 36 | 64 | 76 | 85 | 98 | 100 | 100 | 0 |
| Example 4 (10 % Na₂CO₃ / Na₂SO₄ 50 : 50) | 1,07 | 12,89 | 10,6 | 784 | 0,94 | 0 | 2 | 5 | 25 | 40 | 69 | 80 | 88 | 99 | 100 | 100 | 0 |
| Example 5 (10 % Na₂CO₃ / Na₂SO₄75 : 25) | 1,08 | 12,99 | 9,9 | 789 | 0,95 | 0 | 2 | 6 | 26 | 41 | 69 | 80 | 87 | 99 | 100 | 100 | 0 |

**Table 3a**

| product | available oxygen | calculated coating level | water content | water content | R.o.d 2,5 g in 1000 ml / 350 rpm / 20°C | | | | TAM 55°C in IECA* base 20h | H4 TEST | | Storage test (32C/80% r.h.) in box with IECA* base 2/4/6/8 weeks |
|---|---|---|---|---|---|---|---|---|---|---|---|---|
| | | with AvOx | M60°C | M85°C | 1 min. | 2 min | 3 min. | 90% | | T₁₅₀ | t₈₀ | |
| | [%] | [%] | [%] | [%] | [%] | [%] | [%] | [S] | µw/g | [°C] | [Min.] | res. [%] |
| Core particle 1 | 14,53 | - | 0,30 | 0,42 | 88 | 99 | 100 | 64 | - | 80,4 | 148 | |
| Example 8 (10 % Na₂CO₃^{∗}H₂O) | 13,16 | 10 | 0,08 | 1,29 | 91 | 99 | 100 | 59 | 22 | 71,3 | 255 | 96/88/76/67 |
| Example 9 (comparative-10 % Na₂CO₃) | 13,21 | 10 | 0,05 | 0,28 | 83 | 96 | 99 | 85 | 62 | 77,6 | 170 | 89/79/68/49 |

**Table 3b**

| product | available oxygen | calculated coating level | SiO₂ | Mg | Na₂SO₄ | NaCl | bulk density |
|---|---|---|---|---|---|---|---|
| | | with AvOx | | | | | |
| | [%] | [%] | [%] | [ppm] | [%] | [%] | [kg/l] |
| Core particle 1 | 14,53 | - | 0,21 | 25 | 0,01 | 3,4 | 0,96 |
| Example 8 (10 % Na₂CO₃^{∗}H₂O) | 13,05 | 10 | 0,19 | 27 | < 0,01 | 3,3 | 1,13 |
| Example 9 (comparative-10% Na₂CO₃) | 13,04 | 10 | 0,19 | 28 | < 0,01 | 3,2 | 1,07 |

**Table 3c**

| product | available oxygen | calculated coating level | MPS | span | sieve analysis | | | | | | | | | | | |
|---|---|---|---|---|---|---|---|---|---|---|---|---|---|---|---|---|
| | | with AvOx | | | > 1600 | > 1400 | > 1250 | > 1000 | > 850 | > 600 | > 500 | > 425 | > 300 | > 250 | > 150 | < 150 |
| | [%] | [%] | [µm] | | [%] | [%] | [%] | [%] | [%] | [%] | [%] | [%] | [%] | [%] | [%] | [%] |
| Core particle 1 | 14,53 | - | 826 | 1,11 | 1 | 5 | 11 | 34 | 48 | 71 | 79 | 84 | 92 | 95 | 99 | 1 |
| Example 8 (10 % Na₂CO₃ ^{∗}H₂O) | 13,05 | 10 | 697 | 1,32 | 1 | 3 | 6 | 22 | 34 | 55 | 64 | 71 | 84 | 90 | 100 | 0 |
| Example 9 (comparative-10% Na₂CO₃) | 13,04 | 10 | 762 | 1,21 | 1 | 4 | 8 | 28 | 40 | 64 | 72 | 77 | 89 | 93 | 100 | 0 |

**Table 4**

| product | bulk density | available oxygen | coating level | water content | water content | Intrinsic stability test 55°C | TAM 60°C 2days | Storage test 32°C/80% r.h. in box with IECA^{∗}base 2/4/6/8 weeks | MOD. H4 TEST | |
|---|---|---|---|---|---|---|---|---|---|---|
| | | | with AvOx | M60°C | M85°C | | | | T₁₅₀ | t₈₀ |
| | [kg/l] | [%] | [%] | [%] | [%] | res. [%] | [µW/g] | res. [%] | [°C] | [Min.] |
| Core particles 1 | 1,06 | 14,42 | - | 0,05 | 0,33 | 99/98/98/96/95/94/93/89 | - | - | - | - |
| Example 6 (10% Na₂CO₃^{∗}H₂O) | 1,12 | 12,81 | | 0,05 | 1,95 | 97/97/97/97/92/93/90/93 | 17 | 94/80/72/59 | 70,2 | 310 |
| | | | | 0,05 | 2,01 | | 19 | | | |
| | | | | (1d) | (1d) | | | | | |
| Example 7 (comparative - complete drying) | 1,07 | 13,25 | 8,1 | 0,08 | 0,12 | 100/97/95/97/94/86/91 /90 | 20 | 96/77/67/52 | 78,7 | 160 |
| | | | | | | | 21 | | | |

**Table 5**

| Product | bulk density | available oxygen | cotinglevel | water content | water content | TAM55°C/ 20h | Long term intrinsic stability test 55°C | Storage test 32°C/ 80% r.h. in box with IECA^{∗}base 2/4/6/8 weeks | modified H4 Test | |
|---|---|---|---|---|---|---|---|---|---|---|
| | | | with AvOx | M60°C | M85°C | average 4 measurements | | | T₁₅₀ | t₈₀ |
| | [kg/l] | [%] | [%] | [%] | [%] | [µW/g] | res. [%] | | [°C] | [Min.] |
| Example 10 (10% Na2CO3/Na2SO4 40 : 60) | 1,11 | 12,92 | 9,5 | 0,08 | 0,47 | 7,6 | 99/100/96/96/95 / 97/95/90 | 99/98/94/91 | 66,3 | 1010 |
| Example 11 (10% Na2CO3/Na2SO4 30 : 70) | 1,12 | 12,67 | 11,5 | 0,08 | 0,22 | 7 | 100/100/98/97/97/ 97/95/97 | 100/100/97/91 | 65,5 | 6525 (73,8°C) |
| Example 12 (10% Na2CO3/Na2SO4 20 : 80) | 1,12 | 12,95 | 9,3 | 0,14 | 0,38 | 4 | 95/97/94/93/89/ 85/85/83 | 100/93/91/82 | 66,8 | 3360 |
| Example 13 (10% Na2CO3/Na2SO4 10 : 90) | 1,10 | 13,17 | 7,8 | 0,13 | 0,38 | 20,0 | 90/90/90/88/73/ 77/69/- | 99/86/84/77 | 66,8 | 1305 |
| Example 14 (10% /Na2SO4) | 1,10 | 13,06 | 8,7 | 0,12 | 0,26 | 11,1 | 90/85/79/76/-/- /75/61 | 97/88/73/51 | 67,4 | 850 |

## Claims

1. Coated sodium percarbonate particles containing:
a) A sodium percarbonate core, and
b) A coating representing between 5 and 20 % in weight of the coated sodium percarbonate particles, the coating comprising at least one coating layer comprising at least 20 % in weight sodium carbonate, at least 75 % in weight of the sodium carbonate being in the monohydrate form, wherein the total sodium carbonate monohydrate of the particle is less than 20 % in weight of the coated particle.

2. Coated sodium percarbonate particles according to claim 1, wherein the at least one coating layer comprises at least 25% in weight sodium carbonate.

3. Coated sodium percarbonate particles according to claim 2, wherein the total sodium carbonate content of the coated particles represents more than 5 % in weight of the coated particle.

4. Coated sodium percarbonate particles according to claims 2 or 3, wherein at least 75 % of the total sodium carbonate content of the particle is in the form of sodium carbonate monohydrate.

5. Coated sodium percarbonate particles according to claims 1 to 4, having a mean particle size between 500 and 1000 µm.

6. Coated sodium percarbonate particles according to claims 1 to 5, wherein at least 90 % in weight of the core particles have a diameter greater than 325 µm.

7. Coated sodium percarbonate particles according to claims 1 to 6, wherein at least one of the layers of the coating comprises at least 10 % in weight of sodium sulphate.

8. Coated sodium percarbonate particles according to claim 7, wherein the weight ratio of sodium carbonate to sodium sulphate is between 25:75 and 40:60.

9. Process for preparing the coated sodium percarbonate particles according to any one of claims 1 to 7, in which uncoated sodium percarbonate core particles are contacted at a temperature comprised between 45 and 60°C with a coating solution comprising sodium carbonate and the coated particles are dried at a temperature comprised between 60 and 75°C.

10. Process according to claim 9, wherein the coating solution comprises more than 25 % in weight of sodium carbonate.

11. Process according to claims 9 or 10, wherein the core particles are contacted with the coating solution by spraying the coating solution on the core particles in a fluid bed.

12. Detergent compositions containing coated sodium percarbonate particles according to claims 1 to 8 as bleach active constituent.

## Patentansprüche

1. Umhüllte Natriumpercarbonatpartikel mit:
a) einem Natriumpercarbonatkern und
b) einer Umhüllung, die zwischen 5 und 20 Gew.-% der umhüllten Natriumpercarbonatpartikel ausmacht, wobei die Umhüllung mindestens eine Hüllschicht umfasst, welche mindestens 20 Gew.-% Natriumcarbonat umfasst, wobei mindestens 75 Gew.-% des Natriumcarbonats in der Monohydrat-Form vorliegen, wobei das gesamte Natriumcarbonatmonohydrat des Partikels weniger als 20 Gew.-% des umhüllten Partikels ausmacht.

2. Umhüllte Natriumpercarbonatpartikel nach Anspruch 1, wobei die mindestens eine Hüllschicht mindestens 25 Gew.-% Natriumcarbonat umfasst.

3. Umhüllte Natriumpercarbonatpartikel nach Anspruch 2, wobei der gesamte Natriumcarbonatgehalt der umhüllten Partikel mehr als 5 Gew.-% des umhüllten Partikels ausmacht.

4. Umhüllte Natriumpercarbonatpartikel nach Anspruch 2 oder 3, wobei mindestens 75 % des gesamten Natriumcarbonatgehalts des Partikels in Form von Natriumcarbonatmonohydrat vorliegen.

5. Umhüllte Natriumpercarbonatpartikel nach den Ansprüchen 1 bis 4 mit einer mittleren Teilchengröße zwischen 500 und 1000 µm.

6. Umhüllte Natriumpercarbonatpartikel nach den Ansprüchen 1 bis 5, wobei mindestens 90 Gew.-% der Kernpartikel einen Durchmesser von mehr als 325 µm aufweisen.

7. Umhüllte Natriumpercarbonatpartikel nach den Ansprüchen 1 bis 6, wobei mindestens eine der Schichten der Umhüllung mindestens 10 Gew.-% Natriumsulfat umfasst.

8. Umhüllte Natriumpercarbonatpartikel nach Anspruch 7, wobei das Gewichtsverhältnis von Natriumcarbonat zu Natriumsulfat zwischen 25:75 und 40:60 liegt.

9. Verfahren zur Herstellung der umhüllten Natriumpercarbonatpartikel nach einem der Ansprüche 1 bis 7, bei dem man nicht umhüllte Natriumpercarbonatpartikel bei einer Temperatur zwischen 45 und 60 °C mit einer Umhüllungslösung, die Natriumcarbonat umfasst, in Kontakt bringt und die umhüllten Partikel bei einer Temperatur zwischen 60 und 75 °C trocknet.

10. Verfahren nach Anspruch 9, bei dem die Umhüllungslösung mehr als 25 Gew.-% Natriumcarbonat umfasst.

11. Verfahren nach Anspruch 9 oder 10, bei dem die Kernpartikel durch Aufsprühen der Umhüllungslösung auf die Kernpartikel in einer Wirbelschicht mit der Umhüllungslösung in Kontakt gebracht werden.

12. Wasch- oder Reinigungsmittelzusammensetzungen, die umhüllte Natriumpercarbonatpartikel nach den Ansprüchen 1 bis 8 als bleichwirksamen Bestandteil enthalten.

## Revendications

1. Particules de percarbonate de sodium revêtues contenant :
a) un coeur de percarbonate de sodium, et
b) un revêtement représentant entre 5 et 20% en poids des particules de percarbonate de sodium revêtues, le revêtement comprenant au moins une couche de revêtement comprenant au moins 20% en poids de carbonate de sodium, au moins 75% en poids du carbonate de sodium se trouvant sous forme de monohydrate, le monohydrate de carbonate de sodium total de la particule représentant moins de 20% en poids de la particule revêtue.

2. Particules de percarbonate de sodium revêtues selon la revendication 1, l'au moins une couche de revêtement comprenant au moins 25% en poids de carbonate de sodium.

3. Particules de percarbonate de sodium revêtues selon la revendication 2, la teneur totale en carbonate de sodium des particules revêtues représentant plus de 5% en poids de la particule revêtue.

4. Particules de percarbonate de sodium revêtues selon la revendication 2 ou 3, au moins 75% de la teneur totale en carbonate de sodium de la particule se trouvant sous forme de monohydrate de carbonate de sodium.

5. Particules de percarbonate de sodium revêtues selon les revendications 1 à 4, possédant une grosseur moyenne de particule entre 500 et 1000 µm.

6. Particules de percarbonate de sodium revêtues selon les revendications 1 à 5, au moins 90% en poids des particules de coeur possédant un diamètre supérieur à 325 µm.

7. Particules de percarbonate de sodium revêtues selon les revendications 1 à 6, au moins une des couches du revêtement comprenant au moins 10% en poids de sulfate de sodium.

8. Particules de percarbonate de sodium revêtues selon la revendication 7, le rapport pondéral de carbonate de sodium à sulfate de sodium se situant entre 25:75 et 40:60.

9. Procédé pour la préparation des particules de percarbonate de sodium revêtues selon l'une quelconque des revendications 1 à 7, dans lequel les particules de coeur de percarbonate de sodium non revêtues sont mises en contact à une température comprise entre 45 et 60°C avec une solution de revêtement comprenant du carbonate de sodium et les particules revêtues sont séchées à une température comprise entre 60 et 75°C.

10. Procédé selon la revendication 9, la solution de revêtement comprenant plus de 25% en poids de carbonate de sodium.

11. Procédé selon la revendication 9 ou 10, les particules de coeur étant mises en contact avec la solution de revêtement par pulvérisation de la solution de revêtement sur les particules de coeur dans un lit fluidisé.

12. Compositions détergentes contenant des particules de percarbonate de sodium revêtues selon les revendications 1 à 8 en tant que constituant actif de blanchiment.
